# EUROPÄISCHE PATENTSCHRIFT

(11) **EP 3 908 644 B1**
(45) Veröffentlichungstag und Bekanntmachung des Hinweises auf die Patenterteilung: **18.05.2022**
(21) Anmeldenummer: 20700026.6
(22) Anmeldetag: 07.01.2020
(51) Int. Cl.: C10L 1/28, C08G 77/18

(54) **ORGANOMODIFIZIERTE POLYSILOXANE UND IHRE VERWENDUNG ZUR ENTSCHÄUMUNG VON KRAFTSTOFFEN**
ORGANOMODIFIED POLYSILOXANES AND THEIR USE FOR DEFOAMING OF FUELS
POLYSILOXANES ORGANOMODIFIÉS ET LEUR UTILISATION POUR DÉMOUSSER DES CARBURANTS

(30) Priorität: 10.01.2019 EP 19151100
(43) Veröffentlichungstag der Anmeldung: 17.11.2021
(73) Patentinhaber: Evonik Operations GmbH, 45128 Essen (DE)
(72) Erfinder: PEGGAU, Jörg, 45357 Essen (DE); HENNING, Frauke, 45259 Essen (DE); LOHSE, Andrea, 46236 Bottrop (DE)
(74) Vertreter: Evonik Patent Association
(86) Internationale Anmeldenummer: PCT/EP2020/050179
(87) Internationale Veröffentlichungsnummer: WO 2020/144162

(56) Entgegenhaltungen:
- DE-A1- 10 314 853
- DE-A1-102004 018 926
- DE-A1-102007 031 287

## Beschreibung

Die Erfindung betrifft organomodifizierte Polysiloxane, Zusammensetzungen, insbesondere Kraftstoffzusammensetzungen, die diese organomodifizierten Polysiloxane enthalten, und die Verwendung der organomodifizierten Polysiloxane zur Entschäumung von Kraftstoffen.

Dieselkraftstoffe enthalten Kohlenwasserstoffgemische aus Alkanen, Cycloalkanen und Aromaten. Der überwiegende Teil dieser Kohlenwasserstoffgemische wird durch Erdölfraktionierung gewonnen und entschwefelt. Bei den für Dieselkraftstoffe verwendeten Kohlenwasserstoffgemischen handelt es sich beispielsweise um Kerosin und Gasöl. Neben den auf Erdöl basierenden Kohlenwasserstoffgemischen können Dieselkraftstoffe zusätzlich auch Kraftstoffe enthalten, die nicht auf Erdöl basieren, wie beispielsweise Biokraftstoffe (Biodiesel).

Dieselkraftstoffe haben die unangenehme Eigenschaft, beim Abfüllen in Vorratsbehälter, wie Lagertanks und Kraftstoffbehälter von Motorfahrzeugen, in Verbindung mit Luft, Schaum zu entwickeln. Dies führt zu einer Verzögerung des Abfüllvorgangs und zu einer unzureichenden Befüllung der Lagertanks und Kraftstoffbehälter. Es ist deshalb üblich, dem Dieselkraftstoff Entschäumer zuzusetzen. Diese Entschäumer sollen in möglichst geringer Konzentration wirksam sein und dürfen bei der Verbrennung des Dieselkraftstoffs im Motor keine schädlichen Rückstände bilden oder die Verbrennung des Kraftstoffs negativ beeinflussen. Durch die Zugabe von Biokraftstoffen wird in der Regel vermehrt Feuchtigkeit gebunden, sodass geringe Mengen an Wasser im Dieselkraftstoff fein verteilt vorliegen. Die damit einhergehende Stabilisierung des Schaums und Verlangsamung des Schaumzerfalls sind unerwünscht. Entschäumer, die für Dieselkraftstoffe mit keinem oder geringen Biokraftstoffanteil entwickelt wurden, zeigen bei Verwendung in Dieselkraftstoffen mit hohem Biokraftstoffanteil häufig eine reduzierte Wirksamkeit. Das Bestreben, den Anteil nachwachsender Rohstoffe in Dieselkraftstoffen zu erhöhen, führt ebenfalls zu erhöhten Anforderungen an die Wirksamkeit der Entschäumer. Durch die steigenden Anforderungen an die Emissionsminimierung neuer Motorenteile und durch den Zusatz von nicht erdölbasierenden Kraftstoffen sind die Herausforderungen für Entschäumer von Dieselkraftstoffen stark gestiegen. Hinzukommt, dass die Vielfältigkeit der Rohstoffquellen für den Dieselkraftstoff sowie die möglichen Temperaturdifferenzen bei der Nutzung des Dieselkraftstoffs eine hohe Flexibilität des Entschäumers verlangen.

Entschäumer auf der Basis von Silikon-Polyether-Copolymeren, die auch als Polyethersiloxane, organofunktionell modifizierte Polysiloxane oder organomodifizierte Polysiloxane bezeichnet werden, sind aus dem Stand der Technik bekannt und in der Patentliteratur vielfältig beschrieben.

Ohne durch eine Theorie gebunden zu sein, wird angenommen, dass die dort beschriebenen Silikon-Polyether-Copolymere deshalb als Entschäumerwirken, weil sie nur sehr schlecht im Dieselkraftstoff löslich sind und aufgrund ihrer oberflächenaktiven Eigenschaften an der Schaumlamelle anlagern und spreiten können. Die Destabilisierung der Schaumlamelle, die in der Regel in wenigen Sekunden erfolgt, und die damit verbundene Entschäumung ist eine Konsequenz aus der Spreitung des Entschäumertröpfchens. Das induzierte Mitfließen der Flüssigkeit in der Schaumlamelle führt zum Ausdünnen und schließlich zur Zerstörung der Schaumlamelle. Die im Silikon-Polyether-Copolymer enthaltene Siloxankette verschafft die notwendige niedrige Oberflächenspannung, die Polyetherreste, die seitenständig und/oder endständig an der Siloxankette gebunden vorliegen, verbessern die Kompatibilität mit dem Dieselkraftstoff. Die Polyetherreste leiten sich üblicherweise von ungesättigten Polyethern ab, die durch Anlagerung von Alkylenoxiden, wie beispielsweise Ethylenoxid, Propylenoxid, Butylenoxid, Styroloxid, an ungesättigte Startalkohole, wie beispielsweise Allylalkohol erhalten werden.

GB 2173510 (A) betrifft ein Verfahren zum Entschäumen von Dieselkraftstoff oder *Jet Fuel,* wobei dem Kraftstoff ein auf einem Silikon-Polyether-Copolymer der allgemeinen Formel

Me₃Si(OSiMe₂)ₓ(OSiMeR)_{y}OSiMe₃

basierender Entschäumer zugegeben wird. Dieses Silikon-Polyether-Copolymer enthält einen oder mehrere Polyetherreste R, die durch die allgemeine Formel Q(A)ₙOZ beschrieben werden. Q repräsentiert dabei eine difunktionelle Gruppe, welche an einem Si-Atom gebunden ist, A eine Oxyalkylengruppe, wobei mindestens 80% der Oxyalkylengruppen Oxyethylengruppen sind, und Z ein Wasserstoffatom oder OCR", wobei R" eine einwertige Gruppe ist.

Ein Nachteil des in GB 2173510 (A) beschriebenen Entschäumers besteht in der schlechten Entschäumung von feuchtem Dieselkraftstoff. Das im Kraftstoff enthaltene Wasser ist entweder Kondenswasser, welches während der Lagerung in den Lagertanks in den Kraftstoff gelangt oder während des Transportes in Öltankern - durch die nicht vollständige Entleerung der Tanks von Wasser - in den Kraftstoff eingetragen wird und dort feinst verteilt verbleibt.

Eine verbesserte Entschäumung von feuchtem Dieselkraftstoff wird in EP 0 849 352 A1 beschrieben. Danach soll die Entschäumung von feuchtem Diesel gegenüber den üblicherweise verwendeten Entschäumern dadurch bedeutend verbessert werden, dass mehr als 65% der als Entschäumer verwendeten Silikon-Polyether-Copolymere einen aromatenhaltigen Polyether enthalten.

Bei den in EP 0 849 352 A1 offenbarten Silikon-Polyether-Copolymeren handelt es sich um organomodifizierte Polysiloxane der allgemeinen Formel 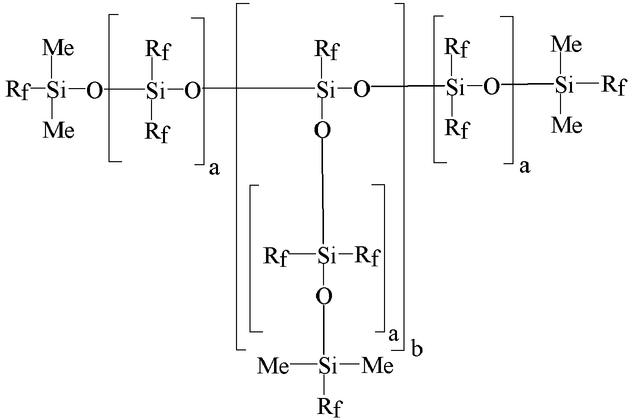 wobei der Rest R_{f}
der Rest R¹ sein kann, wobei
R¹ ein Alkylrest mit 1 bis 4 Kohlenstoffatomen oder der Arylrest ist, jedoch mindestens 80 % der Reste R_{f} Methylreste sind,
oder der Rest R² oder R³ ist, mit der Maßgabe, dass mindestens ein Rest R_{f} der Rest R² ist, wobei
R² ein Polyetherrest der Formel II

   -(Y)_{c}[O(C₂H_{4-d}R'_{d}O)ₘ(CₓH₂ₓO)ₚZ]_{w}

   ist, mit der Bedeutung
   c = 0 oder 1,
   d = 1 bis 3,
   m ≥1,
   x = 2 bis 4,
   p ≥ 1,
   w = 1 bis 4,
   Summe m + p = 3 bis 100,
   R' = ein Wasserstoffrest, ein einwertiger Kohlenwasserstoffrest mit 1 bis 18 C-Atomen, der auch aromatisch und gegebenenfalls auch ein substituierter Aromat sein kann, dessen Substituenten aus den Gruppen Wasserstoffrest, Alkylrest mit 1 bis 6 C-Atomen, Alkoxyrest und Hydroxyrest ausgewählt sind, wobei die Reste R' unterschiedlich sein können, jedoch pro Copolymermolekül mindestens ein Rest R' einen gegebenenfalls substituierten Aromaten bezeichnet,
   Z = ein Wasserstoffrest oder ein einwertiger organischer Rest,
   Y = ein (w+1)-bindiger Kohlenwasserstoffrest mit 1 bis 18 C-Atomen, der auch verzweigt sein kann,
R³ ein Polyetherrest der Formel III

   -(F)_{q}[O(CₓH₂ₓO)ᵣZ]_{g}

   ist, mit der Bedeutung
   g = 1 bis 4,
   q = 0 oder 1,
   x = 2 bis 4,
   r ≥ 3,
   F = ein (g+1)-bindiger Kohlenwasserstoffrest mit 1 bis 18 C-Atomen, der auch verzweigt sein kein,
und wobei
b eine Zahl von 0 bis 8 ist,
a eine Zahl von 1 bis 100 ist, wenn b eine Zahl von 6 bis 8 ist;
a eine Zahl von 1 bis 200 ist, wenn b eine Zahl von 3 bis 6 ist;
a eine Zahl von 1 bis 300 ist, wenn b eine Zahl von 0 bis 3 ist.

Die in EP 0 849 352 A1 offenbarten organomodifizierten Polysiloxane müssen allerdings in höheren Konzentrationen eingesetzt um eine gute Entschäumungswirkung zu zeigen. Dies hat neben dem größeren Mengenbedarf zudem den Nachteil einer höheren SiO₂-Freisetzung während der Verbrennung des Kraftstoffs. Zudem hat sich gezeigt, dass die Kältestabilität dieser organomodifizierten Polysiloxane häufig nicht hoch genug ist. Des Weiteren sind die organomodifizierten Polysiloxane der EP 0 849 352 A1 lediglich für den Einsatz in schwefelhaltigen Dieselkraftstoffen ohne Bioanteil beschrieben. In modernen Dieselkraftstoffen werden die organomodifizierten Polysiloxane der EP 0 849 352 A1 durch die höhere Polarität und den erhöhten Wasseranteil des Dieselkraftstoffs leichter gelöst und neigen dazu, das Wasser im Dieselkraftstoff zu emulgieren und den Dieselkraftstoff nicht mehr ausreichend zu entschäumen.

In der DE 10 2007 031 287 A1 werden gegenüber EP 0 849 352 A1 verbesserte organomodifizierte Polysiloxane beschrieben. Diese organomodifizierten Polysiloxane eignen sich insbesondere zur Entschäumung von flüssigen Dieselkraftstoffen mit Biokraftstoffbeimischungen. Die in DE 10 2007 031 287 A1 beschriebenen organomodifizierte Polysiloxane sind Polysiloxane der allgemeinen Formel 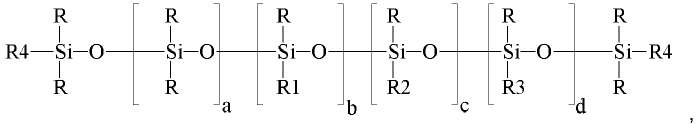 wobei
- N: a + b + c + d + 2 = 60,5 bis 1000,
- a: 50 bis 960,
- b: 4 bis 85,
- c: 0,5 bis 85,
- d: 4 bis 85,
sind,
die Reste R unabhängig voneinander gleiche oder verschiedene, aliphatische oder aromatische Kohlenwasserstoffreste mit 1 bis 10 C-Atomen sind,
die Reste R1 unabhängig voneinander gleiche oder verschiedene Polyetherreste der allgemeinen Formel 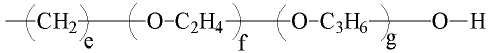
sind, mit der Maßgabe, dass sowohl eine statistische als auch eine blockweise Anordnung der Oxyalkylen-Einheiten vorliegen kann,
wobei
   - e: 3 bis 11,
   - f: 0 bis 60,
   - g: 0 bis 60,
sind,
die Reste R2 unabhängig voneinander gleiche oder verschiedene butylenoxidhaltige Polyetherreste der allgemeinen Formel 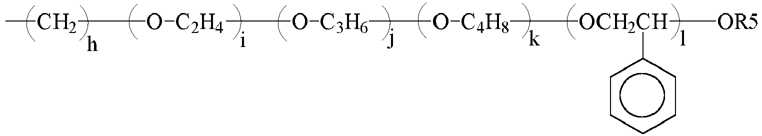
sind, mit der Maßgabe, dass sowohl eine statistische als auch eine blockweise Anordnung der Oxyalkylen- und gegebenenfalls Styroloxid-Einheiten vorliegen kann,
wobei
   - h: 3 bis 11,
   - i: 0 bis 60,
   - j: 0 bis 65,
   - k: 1 bis 60,
   - I: 0 bis 60,
sind,
die Reste R5 unabhängig voneinander gleich oder verschieden sind und Methyl-, Acetyl- oder Wasserstoffrest bedeuten,
die Reste R3 unabhängig voneinander gleiche oder verschiedene Phenolderivate der allgemeinen Formel 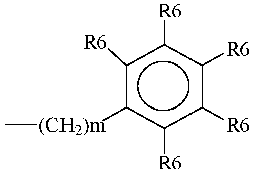
sind,
die Reste R6 unabhängig voneinander gleiche oder verschiedene Reste aus der Gruppe Alkyl, Wasserstoff, Hydroxy oder Alkoxy sind, mit der Maßgabe, dass mindestens ein Rest R6 eine Hydroxygruppe ist,
wobei der Index m eine ganze Zahl von 3 bis 11 ist,
und
die Reste R4 unabhängig voneinander gleiche oder verschiedene Reste R, R1, R2 oder R3 sind.

Die Beispiele der DE 10 2007 031 287 A1 basieren auf einem Wasserstoffsiloxan mit einem SiH-Wert von 2,6 mmol/g. Das Mengenverhältnis von [R₂SiO] zu [RHSiO] des Wasserstoffsiloxans ist somit kleiner als 7:1. Daraus ergibt sich ein Verhältnis von a/(b+c+d) von kleiner als 7:1.

Die organomodifizierten Polysiloxane aus DE 10 2007 031 287 A1 zeigen eine hohe Kältestabilität, müssen allerdings in höheren Konzentrationen eingesetzt werden, damit eine gute Entschäumungswirkung erzielt werden kann. Dies hat neben einem größeren Mengenbedarf an organomodifizierten Polysiloxanen zudem den Nachteil einer höheren SiO₂-Freisetzung während der Verbrennung des Kraftstoffs. Zudem müssen die organomodifizierten Polysiloxane zwei unterschiedliche Polyetherreste tragen. Die Synthese dieser organomodifizierten Polysiloxane ist daher vergleichsweise aufwendig. Des Weiteren hat sich gezeigt, dass nach Umpumpvorgängen von feuchtem Kraftstoff, das Wasser häufig nicht schnell genug demulgiert wird.

Die Entschäumer werden üblicherweise in den Kraftstoff in Verbindung mit Additivpaketen eingearbeitet. Diese Additivpakete werden dem rohen Diesel zu seiner Eigenschaftsverbesserung zugesetzt. Unter Additivpaketen versteht man Mischungen verschiedener Zusatzstoffe, wie beispielsweise Mittel zur Verbesserung des Verbrennungsverhaltens, Mittel zur Verminderung der Rußbildung, Mittel zur Verringerung der Bildung schädlicher Abgase, Inhibitoren zur Verringerung der Korrosion im Motor und seinen Teilen, grenzflächenaktive Substanzen, Schmiermittel und dergleichen. Derartige Additivpakete sind z.B. in GB 2 248 068 (A) und in der Zeitschrift Mineralöltechnik 37(4), S. 20 ff. beschrieben. Die Zusätze des Additivpaketes sind dabei in einem organischen Lösungsmittel zu einem Stammkonzentrat gelöst, das dem rohen Dieselkraftstoff zugesetzt wird.

In jüngerer Zeit werden Dieselkraftstoffen Biokraftstoffe beigemischt. Die zu verwendenden Biokraftstoffen und ihre Einsatzkonzentrationen werden in der Norm DIN EN 590 geregelt. Diese Norm wird an die sich ständig ändernden Anforderungen angepasst. So erfolgte eine Anpassung der DIN EN 590 (Ausgabe Mai 2010) an die Anforderungen der EG-Richtlinie 98/70/EG zur Erfüllung der Biokraftstoffquote, wonach eine Zumischung von Fettsäuremethylestern (*fatty acid methyl esters, FAME*) von mittlerweile bis zu 7 Vol.-% erlaubt ist. Die Grenzwerte für *FAME* gelten nicht für andere (nicht erdölstämmige) Kohlenwasserstoffe, wie hydriertes Pflanzenöl (*hydrogenated vegetable oil,* HVO), Kohlenwasserstoffe aus GTL-Prozessen (GTL steht für *"Gas-to-Liquid"*) oder BTL-Prozessen (*BTL* steht für "*Biomass-to-Liquid*")*.* Auf dem deutschen Markt werden zurzeit mehrere Sorten auf Mineralöl basierender Dieselkraftstoffe für PKW angeboten, die alle gemäß § 4 der 10. BlmSchV die Anforderungen der DIN EN 590 erfüllen müssen. Tendenziell ist es erwünscht, den Biokraftstoffanteil in Dieselkraftstoffen zu erhöhen und den Mineralölanteil zu senken. Dies macht eine ständige Weiterentwicklung der Entschäumer erforderlich.

Die Aufgabe der vorliegenden Erfindung war deshalb die Bereitstellung von Entschäumern, die zumindest einen Nachteil des Standes der Technik überwinden.

Es bestand insbesondere die Aufgabe Entschäumer bereitzustellen, die eine hohe Kältestabilität aufweisen und eine hohe Entschäumungswirkung auch bei geringen Einsatzkonzentrationen zeigen, sodass die erforderlichen Einsatzmengen reduziert und damit die SiO₂-Freisetzung während der Verbrennung des Kraftstoffs verringert werden kann. Zudem sollen die Entschäumer vorzugsweise synthetisch leicht zugänglich und aus wenigen Vorstufen herstellbar sein. Dabei sollen die Entschäumer zur Entschäumung von Dieselkraftstoffen, insbesondere feuchten Dieselkraftstoffen geeignet sein, die neben den auf Mineralöl, insbesondere auf Erdöl basierenden Kraftstoffen, auch solche Kraftstoffe, die nicht auf Mineralöl, insbesondere nicht auf Erdöl basieren, insbesondere Biokraftstoffe (Biodiesel), enthalten.

Überraschenderweise wurde nun gefunden, dass durch die Bereitstellung von Entschäumern, die auf organomodifizierten Polysiloxanen der allgemeinen Formel (I) basieren, diese Aufgabe gelöst wird.

Gelöst wird die Aufgabe der vorliegenden Erfindung daher durch die Gegenstände der unabhängigen Ansprüche. Vorteilhafte Ausgestaltungen der Erfindung sind in den nachgeordneten Ansprüchen, den Beispielen und der Beschreibung angegeben.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck) und weiter bevorzugt zusätzlich bei einer relativen Luftfeuchtigkeit von 50%. Das zahlenmittlere Molekulargewicht M_{N} wird mittels Gel-Permeations-Chromatographie (GPC) gemäß der Norm DIN 55672:2016, vorzugsweise gemäß der Norm DIN 55672-1:2016 bestimmt.

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Wo immer Moleküle beziehungsweise Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung mit eingeschlossen.

Die nachfolgenden Formeln (I), (II), (IIa) und (IIb) beschreiben Verbindungen oder Reste, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes sind als statistische Mittelwerte (Zahlenmittel) zu betrachten. Die verwendeten Indexzahlen sowie die Wertbereiche der angegebenen Indizes werden also als Mittelwerte der möglichen statistischen Verteilung der tatsächlichen vorhandenen Strukturen und/oder deren Mischungen verstanden. Die verschiedenen Fragmente beziehungsweise Wiederholungseinheiten in den nachfolgenden Formeln (I), (II), (IIa) und (IIb) können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. Werden also im Rahmen der vorliegenden Erfindung Verbindungen, wie z. B. organomodifizierte Polysiloxane, beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Ein erster Gegenstand der vorliegenden Erfindung ist ein organomodifiziertes Polysiloxan der allgemeinen Formel (I), 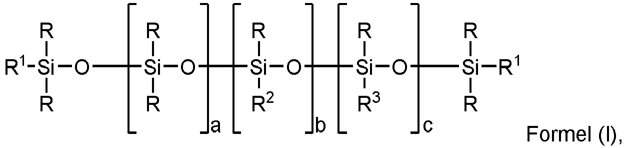 worin
- R: jeweils unabhängig voneinander ausgewählt ist aus der Gruppe bestehend aus Kohlenwasserstoffresten, vorzugsweise mit 1 bis 10 Kohlenstoffatomen, besonders bevorzugt Methyl;
- R¹: jeweils unabhängig voneinander ausgewählt ist aus der Gruppe bestehend aus R, R² und R³, bevorzugt R, besonders bevorzugt Methyl;
- R²: jeweils unabhängig voneinander ausgewählt ist aus der Gruppe bestehend aus Polyetherresten der allgemeinen Formel (II), -Z¹(OC₂H₄)_{d}(OC₃H₆)ₑ(OC₄H₈)_{f}(OC₂H₃Ph)_{g}OR⁴ Formel (II), bevorzugt der allgemeinen Formel (IIa), -Z¹(OC₂H₄)_{d}(OC₃H₆)ₑOR⁴ Formel (IIa), besonders bevorzugt der allgemeinen Formel (IIb), -(CH₂)₃(OC₂H₄)_{d}(OC₃H₆)ₑOH Formel (IIb);
- Z¹: jeweils unabhängig voneinander ausgewählt ist aus der Gruppe bestehend aus zweiwertigen aliphatischen Kohlenwasserstoffresten mit 2 bis 10, bevorzugt 3 bis 4, besonders bevorzugt 3 Kohlenstoffatomen;
- Ph: ein Phenylrest ist;
- R⁴: jeweils unabhängig voneinander ausgewählt ist aus der Gruppe bestehend aus einem Wasserstoffradikal, Alkylresten mit 1 bis 4 Kohlenstoffatomen und Acylresten mit 1 bis 4 Kohlenstoffatomen; bevorzugt ausgewählt ist aus der Gruppe bestehend aus einem Wasserstoffradikal, einem Methylrest und einem Acetylrest; besonders bevorzugt ein Wasserstoffradikal ist.
- R³: jeweils unabhängig voneinander ausgewählt ist aus der Gruppe bestehend aus Resten der allgemeinen Formel (III),

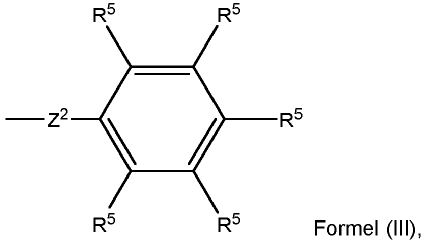

- Z²: jeweils unabhängig voneinander ausgewählt ist aus der Gruppe bestehend aus zweiwertigen aliphatischen Kohlenwasserstoffresten mit 2 bis 10, bevorzugt 3 bis 4, besonders bevorzugt 3 Kohlenstoffatomen;
- R⁵: jeweils unabhängig voneinander ausgewählt ist aus der Gruppe bestehend aus einem Wasserstoffradikal, einer Hydroxygruppe, Alkylresten mit 1 bis 4 Kohlenstoffatomen und Alkoxyresten mit 1 bis 4 Kohlenstoffatomen, mit der Maßgabe, dass mindestens ein Rest R⁵ eine Hydroxygruppe ist;
wobei gilt:
- a =: 50 bis 960, bevorzugt 80 bis 200, besonders bevorzugt 100 bis 190;
- b =: 4 bis 85, bevorzugt 6 bis 25, besonders bevorzugt 8 bis 20;
- c =: 0,5 bis 10, bevorzugt 0,8 bis 8, besonders bevorzugt 1 bis kleiner als 4,5;
- d =: 0 bis 60, bevorzugt 5 bis 20, besonders bevorzugt 10 bis 15;
- e =: 0 bis 60, bevorzugt 1 bis 30, besonders bevorzugt 2 bis 5;
- f =: 0 bis 60, bevorzugt 0 bis 10, besonders bevorzugt 0;
- g =: 0 bis 60, bevorzugt 0 bis 10, besonders bevorzugt 0;
mit der Maßgabe, dass gilt:
d+e+f+g = 1 bis 60, bevorzugt 5 bis 30, besonders bevorzugt 10 bis 20; und
a/(b+c) ist größer als 7, bevorzugt >7 bis 13, besonders bevorzugt 8 bis 12, insbesondere 9 bis 11.

Die erfindungsgemäßen organomodifizierten Polysiloxane gemäß Formel (I) können insbesondere als Entschäumer für Kraftstoffzusammensetzungen, die Dieselkraftstoff oder Heizöl und vorzugsweise Biokraftstoff enthalten, eingesetzt werden.

Vorzugsweise gilt für das organomodifizierten Polysiloxan gemäß Formel (I): a+b+c+2= 60 bis 1000, bevorzugt 90 bis 220, besonders bevorzugt 130 bis 170. Die Summe (a+b+c+2) steht dabei für die Anzahl der Siliziumatome des organomodifizierten Polysiloxans beziehungsweise für die Kettenlänge des organomodifizierten Polysiloxans.

Die Siloxaneinheiten [R₂SiO], [RR²SiO] und [RR³SiO] sowie die Oxyalkylengruppen (OC₂H₄), (OC₃H₆), (OC₄H₈) und (OC₂H₃Ph) der organomodifizierten Polysiloxane gemäß Formel (I) können beliebig angeordnet sein. Sie können also blockweise mit einer beliebigen Anzahl an Blöcken und einer beliebigen Sequenz angeordnet sein oder einer statistischen Verteilung unterliegen, sie können auch alternierend angeordnet sein, oder hinsichtlich ihrer Häufigkeit entlang der Kette einen Gradienten bilden, oder eine Verteilung entlang der Kette aufweisen, die aus einer möglichen unterschiedlichen Reaktivität der Vorstufen resultiert oder in thermodynamischen Gleichgewichten begründet ist.

Die Oxyalkylengruppen des Polyetherrests R² leiten sich von entsprechenden monomeren Alkylenoxiden ab, also (OC₂H₄) von Ethylenoxid, (OC₃H₆) von Propylenoxid, (OC₄H₈) von Butylenoxid und (OC₂H₃Ph) von Styroloxid. Die Polyether, die den Polyetherresten R² zugrunde liegen, können durch Anlagerung der monomeren Alkylenoxide an einen Startalkohol, vorzugsweise Allylalkohol erhalten werden. Die Herstellung solcher Polyether durch alkalische Katalyse, beispielsweise mit Kalium- oder Natriummethylat, oder durch Doppel-Metall-Cyanid-Katalyse (DMC-Katalyse) mit Doppel-Metall-Cyanid-Katalysatoren (DMC-Katalysatoren) kann dem Stand der Technik entnommen werden. Der Polyetherrest R² ist vorzugsweise ein hydroxy-funktioneller Polyetherrest.

Die Polyoxyalkylenkette des Polyetherrests R² ist über einen zweiwertigen Rest Z¹ mit der Polysiloxankette des organomodifizierten Polysiloxans der allgemeinen Formel (I) verknüpft. Der zweiwertige Rest Z¹ ist vorzugsweise jeweils unabhängig ausgewählt aus der Gruppe bestehend aus zweiwertigen Alkylenresten der Formel -(CH₂)ₙ- mit n = 2 bis 10, bevorzugt 3 bis 4, besonders bevorzugt 3. Z¹ ist dabei vorzugsweise ausgewählt aus zweiwertigen Ethylen-, Propylen-, 1-Methylpropylen- und 1,1-Dimethylpropylen-Resten, insbesondere bevorzugt -CH₂CH₂CH₂-.

Der Polyetherrest R² weist vorzugsweise keine von Butylenoxid abgeleiteten Gruppen, also keine Oxybutylengruppen (OC₄H₈) auf. Es gilt also also vorzugsweise für das organomodifizierte Polysiloxan der allgemeinen Formel (I): f = 0. Es ist außerdem bevorzugt, dass der Polyetherrest R² keine von Styroloxid abgeleiteten Gruppen, also Oxyalkylengruppen der Formel (OC₂H₃Ph) aufweist. Es gilt also vorzugsweise für das organomodifizierte Polysiloxan der allgemeinen Formel (I): g = 0. Es ist weiterhin bevorzugt, dass der Polyetherrest R² keine Oxyalkyleneinheiten aufweist, die sich von Butylenoxid oder Styroloxid ableiten. Es ist also bevorzugt, dass für das organomodifizierte Polysiloxan der allgemeinen Formel (I) gilt: f = 0 und g = 0. Es ist weiter bevorzugt, dass sich der Polyetherrest R² zusätzlich von Allylalkohol ableitet. Weiter bevorzugt gilt also: f = 0 und g = 0 und Z¹ = -(CH₂)₃-. Es ist zudem besonders bevorzugt, dass der Polyetherrest R² mit einer Hydroxylgruppe terminiert ist. Es ist also besonders bevorzugt das gilt: f = 0 und g = 0 und Z¹ = -(CH₂)₃- und R⁴ = H.

Vorzugsweise beträgt das zahlenmittlere Molekulargewicht M_{N} des Polyetherrests R² von 500 g/mol bis 1400 g/mol, bevorzugt von 600 g/mol bis 1200 g/mol, besonders bevorzugt von 700 g/mol bis 900 g/mol. Das zahlenmittlere Molekulargewicht M_{N} des Polyetherrests R² ist dabei identisch mit dem zahlenmittleren Molekulargewicht M_{N} des entsprechenden einfach ungesättigten Polyethers, der dem Polyetherrest R² zugrundeliegt.

Es ist weiterhin bevorzugt, dass der Polyetherrest R² berechnet ohne Z¹ und berechnet ohne OR⁴ eine Molmasse M(PE) von 450 g/mol bis 1350 g/mol, bevorzugt von 550 g/mol bis 1150 g/mol, besonders bevorzugt von 650 g/mol bis 850 g/mol aufweist. Die Molmasse M(PE) berechnet sich dabei nach der Gleichung M(PE) = 44 g/mol * d + 58 g/mol * e + 72 g/mol * f + 120 g/mol * g, wobei sich d, e, f und g auf die Indizes in Formel (II), (IIa) beziehungsweise (IIb) beziehen, wobei für Formel (IIa) und (IIb) entsprechend f = 0 und g = 0 gilt.

Es ist bevorzugt, dass der Massenanteil der Oxyethylengruppen (OC₂H₄) bezogen auf die Gesamtmasse aller Oxyalkylengruppen mehr als 50%, bevorzugt 60% bis 90%, besonders bevorzugt 70% bis 80% beträgt.

Vorzugsweise beträgt der Massenanteil der Oxypropylengruppen (OC₃H₆) bezogen auf die Gesamtmasse aller Oxyalkylengruppen weniger als 50%, bevorzugt von 10% bis 40%, besonders bevorzugt von 20% bis 30%.

Es ist weiterhin bevorzugt, dass der Massenanteil der Oxybutylenengruppen (OC₄H₈) bezogen auf die Gesamtmasse aller Oxyalkylengruppen weniger als 20%, bevorzugt weniger als 10%, besonders bevorzugt 0% beträgt.

Es ist weiterhin bevorzugt, dass der Massenanteil der von Styroloxid abgeleiteten Oxyalkylengruppen (OC₂H₃Ph) bezogen auf die Gesamtmasse aller Oxyalkylengruppen weniger als 20%, bevorzugt weniger als 10%, besonders bevorzugt 0% beträgt.

Vorzugsweise beträgt der Massenanteil der Oxyethylengruppen (OC₂H₄) bezogen auf die Gesamtmasse aller Oxyalkylengruppen mindestens 50%, bevorzugt 60% bis 90%, besonders bevorzugt 70% bis 80%, der Massenanteil der Oxypropylengruppen (OC₃H₆) bezogen auf die Gesamtmasse aller Oxyalkylengruppen höchstens 50%, bevorzugt 10% bis 40%, besonders bevorzugt 20% bis 30%, der Massenanteil der Oxybutylengruppen (OC₄H₈) bezogen auf die Gesamtmasse aller Oxyalkylengruppen 0% und der Massenanteil der von Styroloxid abgeleiteten Oxyalkylengruppen (OC₂H₃Ph) 0%, mit der Maßgabe, dass die Summe des Massenanteils der Oxyethylengruppen (OC₂H₄) und der Oxypropylengruppen (OC₃H₆) bezogen auf die Gesamtmasse aller Oxyalkylengruppen zusammen 100% ergeben.

Neben dem Polyetherrest R² weist das organomodifizierte Polysiloxan gemäß Formel (I) einen aromatischen Rest R³ auf. Dieser Rest R³ weist als zweiwertigen Rest Z² vorzugsweise einen Rest ausgewählt aus der Gruppe bestehend aus zweiwertigen Alkylenresten der Formel -(CH₂)ₙ- mit n = 2 bis 10, bevorzugt 3 bis 4, besonders bevorzugt 3 auf. Der Rest R³ ist vorzugsweise ausgewählt aus einem Phenolrest oder Phenolderivatresten. Der Rest R³ weist also bevorzugt genau eine Hydroxylgruppe auf. Besonders bevorzugte Reste R³ leiten sich von Eugenol oder Allylphenol, insbesondere von o-Allylphenol ab.

Für einen von Eugenol abgeleiteten Rest R³ gilt: Z² ist ein Propylenrest -(CH₂)₃-; drei Reste R⁵ sind Wasserstoffradikale, ein Rest R⁵ ist eine Hydroxylgruppe und ein Rest R⁵ ist eine Methoxygruppe, das heißt also: R³ = -(CH₂)₃[C₆H₃(OCH₃)]OH.

Für einen von Allylphenol abgeleiteten Rest R³ gilt: Z² ist ein Propylenrest -(CH₂)₃-; vier Reste R⁵ sind Wasserstoffradikale und ein Rest R⁵ ist eine Hydroxylgruppe, das heißt also: R³ = -(CH₂)₃(C₆H₄)OH.

Die organischen Reste R² und R³ können in das Molekül des Polysiloxans durch Addition von entsprechenden ungesättigten Vorstufen (z.B. Allyl- oder Vinylverbindungen) an SiH-Gruppen eines entsprechenden SiH-funktionellen Polysiloxans in Anwesenheit eines Hydrosilylierungskatalysators, z.B. entsprechend dem Verfahren der US 5,334,227 (A) oder wie in "*Silicones: chemistry and technology*", *Vulkan Verlag Essen,* beschrieben, eingeführt werden. Die organomodifzierten Polysiloxane gemäß Formel (I) werden also vorzugsweise mittels Hydrosilylierung auf die dem Fachmann bekannte Weise hergestellt. Dabei werden die entsprechenden hydrosilyl-funktionellen Polysiloxane mit olefinisch ungesättigten Verbindungen nach bekannten Verfahren umgesetzt. Bei den olefinisch ungesättigten Verbindungen handelt es sich um olefinisch ungesättigte Polyether, vorzugsweise Allylpolyether, und um olefinisch ungesättigte Phenolderivate, vorzugsweise 2-Allylphenol und/oder Eugenol. Die Hydrosilylierungsreaktion wird dabei bevorzugt mit Hilfe der dem Fachmann geläufigen Katalysatoren der Platingruppe katalysiert, mehr bevorzugt mit Hilfe von Karstedt-Katalysatoren.

Die Polysiloxankette des organomodifizierten Polysiloxans gemäß Formel (I) weist seitenständig und optional auch endständig (also in α,ω-Position) Reste ausgewählt aus der Gruppe bestehend aus R² und R³ auf. Vorzugsweise weist die Polysiloxankette des organomodifizierten Polysiloxans nur seitenständig Reste ausgewählt aus der Gruppe bestehend aus R² und R³ auf. Dies hat insbesondere wirtschaftliche Gründe.

Der Verzweigungsgrad des organomodifizierten Polysiloxans kann durch den Quotienten (b+c)/(a+b+c+2) angegeben werden. Vorzugsweise gilt: (b+c)/(a+b+c+2) = 0,05 bis 0,30, bevorzugt 0,07 bis 0,15, besonders bevorzugt 0,09 bis 0,11.

Durch die Wahl der Reste R, R¹, R² und R³ sowie ihrer Mengenverhältnisse gelingt es, die entschäumende Wirkung sowie die Kältestabilität des Entschäumers optimal einzustellen.

Vorzugsweise gilt für das organomodifizierte Polysiloxan der allgemeinen Formel (I), dass
- R: jeweils unabhängig voneinander ausgewählt ist aus der Gruppe bestehend aus Kohlenwasserstoffresten mit 1 bis 10 Kohlenstoffatomen, besonders bevorzugt Methyl;
- R¹: ein Rest R ist, besonders bevorzugt Methyl;
- R²: jeweils unabhängig voneinander ausgewählt ist aus der Gruppe bestehend aus Polyetherresten der allgemeinen Formel (IIa), -Z¹(OC₂H₄)_{d}(OC₃H₆)ₑOR⁴ Formel (IIa), besonders bevorzugt der allgemeinen Formel (IIb), -(CH₂)₃(OC₂H₄)_{d}(OC₃H₆)ₑOH Formel (IIb);
- Z¹: jeweils unabhängig voneinander ausgewählt ist aus der Gruppe bestehend aus zweiwertigen aliphatischen Kohlenwasserstoffresten mit 3 bis 4, besonders bevorzugt 3 Kohlenstoffatomen;
- R⁴: jeweils unabhängig voneinander ausgewählt ist aus der Gruppe bestehend aus einem Wasserstoffradikal, einem Methylrest und einem Acetylrest; besonders bevorzugt ein Wasserstoffradikal ist;
- Z²: jeweils unabhängig voneinander ausgewählt ist aus der Gruppe bestehend aus zweiwertigen aliphatischen Kohlenwasserstoffresten mit 3 bis 4, besonders bevorzugt 3 Kohlenstoffatomen;
- R⁵: jeweils unabhängig voneinander ausgewählt ist aus der Gruppe bestehend aus einem Wasserstoffradikal, einer Hydroxygruppe, Alkylresten mit 1 bis 4 Kohlenstoffatomen und Alkoxyresten mit 1 bis 4 Kohlenstoffatomen, mit der Maßgabe, dass mindestens ein Rest R⁵ eine Hydroxygruppe ist;
- a =: bevorzugt 80 bis 200, besonders bevorzugt 100 bis 190;
- b =: bevorzugt 6 bis 25, besonders bevorzugt 8 bis 20;
- c =: bevorzugt 0,8 bis 8, besonders bevorzugt 1 bis kleiner als 4,5;
- d =: bevorzugt 5 bis 20, besonders bevorzugt 10 bis 15;
- e =: bevorzugt 1 bis 30, besonders bevorzugt 2 bis 5;
- f =: bevorzugt 0 bis 10, besonders bevorzugt 0;
- g =: bevorzugt 0 bis 10, besonders bevorzugt 0;
mit der Maßgabe, dass gilt:
- d+e =: 5 bis 30, besonders bevorzugt 10 bis 20; und
- a/(b+c) =: 7 bis 13, besonders bevorzugt 8 bis 12, insbesondere 9 bis 11.

Für besonders bevorzugte organomodifizierte Polysiloxane der allgemeinen Formel (I) gilt:
- R: = Methyl;
- R¹: = Methyl;
- R²: = -(CH₂)₃(OC₂H₄)_{d}(OC₃H₆)ₑOH;
- R³: = -(CH₂)₃(C₆H₄)OH oder -(CH₂)₃[C₆H₃(OCH₃)]OH, insbesondere -(CH₂)₃(C₆H₄)OH.
- a: = 100 bis 190;
- b: = 8 bis 20;
- c: = 1 bis kleiner als 4,5;
- d: = 10 bis 15;
- e: = 2 bis 5;
- f: = 0;
- g: = 0;
mit der Maßgabe, dass gilt:
d+e = 10 bis 20; und
a/(b+c) = 8 bis 12, insbesondere 9 bis 11.

Die erfindungsgemäßen organomodifizierten Polysiloxane gemäß Formel (I) können dem Kraftstoff als Entschäumer direkt zugesetzt werden. Es ist jedoch in der Praxis bevorzugt, den Entschäumer dem sogenannten Additivpaket zuzusetzen. Das Additivpaket enthält im Wesentlichen ein Detergenz, einen Demulgator/*Dehazer* und einen Cetan-Zahl-Verbesserer. Um die Verträglichkeit des organomodifizierten Polysiloxans gemäß Formel (I) mit dem Additivpaket zu verbessern, kann es von Vorteil sein, den Entschäumer in einer Mischung mit 2-Ethylhexanol oder Glykolen oder aromatenhaltigen Lösungsmitteln einzusetzen.

Ein weiterer Gegenstand der Erfindung ist daher eine Zusammensetzung enthaltend die Komponenten:
(a) mindestens einen Entschäumer ausgewählt aus der Gruppe bestehend aus organomodifizierten Polysiloxanen gemäß Formel (I);
(b) mindestens einen Demulgator ausgewählt aus der Gruppe bestehend aus Acetylendiolen, Acetylendiolpolyethern, Fettalkoholalkoxylaten und Polyethersiloxanen, die sich von den organomodifizierten Polysiloxanen gemäß Formel (I) unterscheiden;
(c) optional mindestens ein Lösungsmittel ausgewählt aus der Gruppe bestehend aus Fettalkoholen mit 6 bis 11 Kohlenstoffatomen.

Die Acetylendiole beziehungsweise Acetylendiolpolyether der Komponente (b) sind vorzugsweise ausgewählt aus Verbindungen der allgemeinen Formel R′Rʺ(R‴O)C-C≡C-C(OR‴)RʺR′;
wobei R' und R" jeweils unabhängig voneinander ausgewählt sind aus der Gruppe bestehend aus linearen und verzweigten, substituierten und unsubstituierten Alkyl-, Aryl- und Alkoxyalkylresten mit 1 bis 10 Kohlenstoffatomen; und wobei
R‴ jeweils unabhängig voneinander ausgewählt ist aus der Gruppe bestehend aus einem Wasserstoffatom und Polyetherresten.

Die Polyetherreste sind dabei erhältlich durch Umsetzung eines entsprechenden Alkylendiols R′Rʺ(HO)C-C≡C-C(OH)RʺR′ mit Alkylenoxiden ausgewählt aus der Gruppe bestehend aus Ethylenoxid, Propylenoxid und Butylenoxid. Vorzugsweise ist R‴ ein Polyetherrest der Formel -(CH₂CH₂O)ₙ-H mit n = 1 bis 60.

Die Fettalkoholalkoxylate der Komponente (b) sind durch Alkoxylierung, das heißt Umsetzung mit Ethylenoxid (Fettalkoholethoxylate, FAEO), Propylenoxid (FAPO) oder Butylenoxid, vorzugsweise jedoch Ethoxylierung von linearen oder verzweigten, vorzugweise verzweigten, Fett- bzw. Oxo-Alkoholen in Gegenwart basischer oder saurer Katalysatoren bei Temperaturen von 120-200 °C und Drücken von 1-10 bar herstellbar. Die dabei verwendeten Fettalkohole sind vorzugsweise ausgewählt aus der Gruppe bestehend aus Fettalkoholen mit 6 bis 16 Kohlenstoffatomen. Bevorzugt handelt es sich bei diesen Fettalkoholen um gesättigte Alkohole, besonders bevorzugt um gesättigte, primäre Alkohole ausgewählt aus der Gruppe bestehend aus C₆H₁₃OH, C₇H₁₅OH, C₈H₁₇OH, C₉H₁₉OH, C₁₀H₂₁OH, C₁₁H₂₃OH, C₁₂H₂₅OH, C₁₃H₂₇OH, C₁₄H₂₉OH, C₁₅H₃₁OH, C₁₆H₃₃OH. Die Fettalkohole werden durch die Alkoxylierung an die gewünschte Polarität angepasst. Als Maß für die Polarität eignet sich der HLB-Wert, der vorzugsweise nach der Methode von Griffin bestimmt wird (W. C. Griffin: Classification of surface active agents by HLB, J. Soc. Cosmet. Chem. 1, 1949, S. 311-326). Der HLB-Wert der Fettalkoholalkoxylate liegt vorzugweise zwischen 5 und 10.

Komponente (c) ist mindestens ein Lösungsmittel ausgewählt aus der Gruppe bestehend aus Fettalkoholen mit 6 bis 11 Kohlenstoffatomen. Die Fettalkohole können linear oder verzweigt sein. Vorzugsweise handelt es sich um verzweigte Fettalkohole. Es ist weiterhin bevorzugt, dass es sich bei den Fettalkoholen um gesättigte Alkohole, besonders bevorzugt um gesättigte, primäre Alkohole ausgewählt aus der Gruppe bestehend aus C₆H₁₃OH, C₇H₁₅OH, C₈H₁₇OH, C₉H₁₉OH, C₁₀H₂₁OH, C₁₁H₂₃OH handelt, wie beispielsweise 2-Ethylhexanol oder Isononanol.

Es ist dabei bevorzugt, dass:
Komponente (a) in einem Massenteil von 20% bis 80%, bevorzugt von 30% bis 70%, besonders bevorzugt von 40% bis 60%; und
Komponente (b) in einem Massenteil von 1% bis 25%, bevorzugt von 2% bis 20%, besonders bevorzugt von 4% bis 15%;
bezogen auf die Gesamtmasse der erfindungsgemäßen Zusammensetzung enthalten ist.

Vorzugsweise sind in der Zusammensetzung die Komponenten (a) und (b) in einem Gewichtsverhältnis von (a) zu (b) von 2:1 zu 15:1, bevorzugt von 3:1 zu 13:1, besonders bevorzugt von 4:1 zu 11:1 enthalten.

Diese das erfindungsgemäße organomodifizierte Polysiloxan gemäß Formel (I) enthaltende Zusammensetzung wird dem Kraftstoff als Additivpaket zugesetzt.

Folgende kommerziell erhältliche Produkte können beispielsweise im Additivpaket enthalten sein: Surfynol^{®} 420, Surfynol^{®} 440, Surfynol^{®} 2502, TEGO^{®} Antifoam MR 465, TEGO^{®} Antifoam MR 467, TEGO^{®} Antifoam MR 507, TEGO^{®} Antifoam KS 911, TEGO^{®} Surten W 111, TEGO^{®} Surten W 133, TEGO^{®} SQS 25, TEGOPREN^{®} 5801, TEGOPREN^{®} 5803, TEGOPREN^{®} 5831, TEGOPREN^{®} 5851, TOMAMINE^{®} PA 14, TOMAMINE^{®} PA 17, TOMAMINE^{®} EC 2, TOMADOL^{®} 25-3, ADOGEN^{®} 570, ADOGEN^{®} 141 D, ADOGEN^{®} 172, VARINE^{®} O, VARONIC^{®} K 202 LC.

Im Einzelnen können solche Additivpakete beispielsweise enthalten:
- Cetanzahlverbesserer, z.B. 2-Ethylhexylnitrat;
- Detergenzien, z.B. ADOGEN^{®} 570, Polyisobutenderivate;
- Korrosionsinhibitoren, z.B. ADOGEN^{®} 141 D, VARINE^{®} O;
- *Dehazer* und *Stabilisatoren,* z.B. TOMAMINE^{®} EC 2, TOMADOL^{®} 25-3;
- Schmierverbesserer, z.B. TOMAMINE^{®} PA 17, Fettsäuren;
- Entschäumer, z.B. TEGO^{®} Antifoam 507.

Das Mengengerüst und die Kombination werden dabei an die jeweiligen Anforderungen angepasst. Die Auswahl der Rohstoffe und die Einstellung der Mengenverhältnisse geschehen also in Abhängigkeit des geforderten Eigenschaftsprofils.

Alternativ kann das erfindungsgemäße organomodifizierte Polysiloxan gemäß Formel (I) dem Kraftstoff direkt zugesetzt werden.

Ein weiterer Gegenstand der Erfindung ist daher eine Kraftstoffzusammensetzung enthaltend Dieselkraftstoff, der vorzugsweise Biokraftstoff enthält, und mindestens ein organomodifiziertes Polysiloxan gemäß Formel (I) oder eine erfindungsgemäße Zusammensetzung enthaltend die Komponenten (a), (b) und optional (c).

Dieselkraftstoffe sind dabei vorzugsweise solche Kraftstoffe, die die Anforderungen der DIN EN 590 (Ausgabe Oktober 2017) erfüllen.

Die erfindungsgemäße Kraftstoffzusammensetzung kann entweder wasserfrei sein ("trockener Diesel") oder aber Wasser enthalten. Insbesondere kann es sich bei der Kraftstoffzusammensetzung um eine "feuchte" Kraftstoffzusammensetzung handeln, also um eine Kraftstoffzusammensetzung, die einen Anteil von mindestens 250 Massen-ppm Wasser bezogen auf die Kraftstoffzusammensetzung aufweist.

Der Anteil an organomodifizierten Polysiloxanen gemäß Formel (I) in der Kraftstoffzusammensetzung wird vorzugsweise in Abhängigkeit vom Schaumverhalten des Diesels gewählt. Der Anteil an organomodifizierten Polysiloxanen gemäß Formel (I) in der Kraftstoffzusammensetzung kann daher variieren. Es ist bevorzugt, dass der Massenanteil des mindestens einen organomodifizierten Polysiloxans bezogen auf die Gesamtmasse der Kraftstoffzusammensetzung von 1 ppm bis 40 ppm, bevorzugt von 2 ppm bis 25 ppm besonders bevorzugt von 4 ppm bis 15 ppm beträgt.

Um eine geringere SiO₂-Freisetzung bei der Verbrennung der Kraftstoffzusammensetzung zu erreichen, ist der Siliziumanteil möglichst gering einzustellen. Daher ist es bevorzugt, dass der Massenanteil von Silizium bezogen auf die Gesamtmasse der Kraftstoffzusammensetzung von 0,2 ppm bis 2 ppm, bevorzugt von 0,4 ppm bis 1,5 ppm besonders bevorzugt von 0,5 ppm bis 0,8 ppm beträgt.

Der Anteil an Biokraftstoff in der erfindungsgemäßen Kraftstoffzusammensetzung kann prinzipiell beliebig sein. Es ist aber bevorzugt, dass der Massenanteil an Biokraftstoff bezogen auf die Gesamtmasse der Kraftstoffzusammensetzung mindestens 4%, bevorzugt von 4% bis 20% besonders bevorzugt von 4% bis 8% beträgt. In der erfindungsgemäßen Kraftstoffzusammensetzung können einer oder mehrere Biokraftstoffe enthalten sein. Sind mehrere Biokraftstoffe in der erfindungsgemäßen Kraftstoffzusammensetzung enthalten, so beziehen sich die oben gemachten Angaben für den Anteil an Biokraftstoff auf die Summe aller Biokraftstoffe.

Vorzugsweise ist der Biokraftstoff ausgewählt aus der Gruppe bestehend aus Fettsäuremethylestern, hydrierten Pflanzenölen, Kohlenwasserstoffen aus *Biomass-to-Liquid-*Prozessen und Kohlenwasserstoffen aus *Gas-to-Liquid-*Prozessen*.*

Weiter bevorzugt ist der Biokraftstoff ausgewählt aus der Gruppe bestehend aus Fettsäuremethylestern, hydrierten Pflanzenölen und Kohlenwasserstoffen aus *Biomass-to-Liquid-*Prozessen.

Besonders bevorzugt enthält die Kraftstoffzusammensetzung einen Biokraftstoff basierend auf Fettsäuremethylestern *(FAME),* insbesondere auf Rapsölmethylester als *FAME.*

Die organomodifizierten Polysiloxane gemäß Formel (I) sind besonders gut zur Entschäumung von Dieselkraftstoffen, die Biokraftstoffe enthalten, geeignet.

Ein weiterer Gegenstand der Erfindung ist daher die Verwendung eines organomodifizierten Polysiloxans gemäß Formel (I) oder einer erfindungsgemäßen Zusammensetzung, die die Komponenten (a) und (b) und optional (c) enthält, zur Entschäumung von flüssigen Kraftstoffen, bevorzugt von Dieselkraftstoffen, besonders bevorzugt von Dieselkraftstoffen, die Biokraftstoffe enthalten.

In den nachfolgend aufgeführten Beispielen wird die vorliegende Erfindung beispielhaft dargestellt, ohne dass die Erfindung, deren Anwendungsbreite sich aus der gesamten Beschreibung, und den Ansprüchen ergibt, auf die in den Beispielen genannten Ausführungsformen beschränkt ist.

### Beispiele

### Entschäumer 1 (erfindunqsqemäßes Beispiel):

Entschäumer 1 wurde wie folgt hergestellt:
In einem 500-ml-Vierhalskolben mit angeschlossenem KPG-Rührer, Rückflusskühler und Innenthermometer wurden 117,3 g eines Polydimethyl(methylhydrogen)siloxan-Copolymers mit einer mittleren Kettenlänge von 155 mit einem Wasserstoffgehalt von 1,12 val SiH/kg und 93,7 g eines hydroxyfunktionellen Allylpolyoxyalkylens mit einem mittleren Molekulargewicht von 832 g/mol (bestimmt nach Jodzahl), einem Propylenoxidanteil von 74 Gew.% und einem Ethylenoxidanteil von 26 Gew.% (Gew.% bezogen auf die Gesamtmasse von Propylenoxid und Ethylenoxid, EO/PO-Polyether hergestellt nach dem Stand der Technik durch eine KOH-katalysierte Umsetzung mit Allylalkohol als Startalkohol) zusammen mit 7,6 g 2-Allylphenol vorgelegt und unter Rühren auf 90 °C geheizt. Die exotherme Reaktion wurde durch Zugabe von 10 ppm Platin in Form des Karstedt-Katalysators (1,5 Gew.% Pt in Decamethylcyclopentasiloxan) gestartet und nach Abklingen der Exothermie weiter bei 90°C gerührt. Der gasvolumetrisch bestimmte SiH-Umsatz lag nach 1,5 Stunden bei 99,5 %. Nach Zugabe von 10,8 g Propylenglykol und Filtration über einen Faltenfilter erhielt man eine klare, gelb-bräunliche Flüssigkeit mit einer Viskosität von 5540 mPa s bei 25°C.

### Entschäumer 2 (Vergleichsbeispiel):

Entschäumer 2 wurde wie folgt hergestellt:
In einem 500-ml-Vierhalskolben mit angeschlossenem KPG-Rührer, Rückflusskühler und Innenthermometer wurden 90,2 g eines Polydimethyl(methylhydrogen)siloxan-Copolymers mit einer mittleren Kettenlänge von 155 mit einem Wasserstoffgehalt von 1,12 val SiH/kg und 108,16 g eines hydroxyfunktionellen Allylpolyoxyalkylens mit einem mittleren Molekulargewicht von 832 g/mol (bestimmt nach Jodzahl), einem Propylenoxidanteil von 74 Gew.% und einem Ethylenoxidanteil von 26 Gew.% (Gew.% bezogen auf die Gesamtmasse von Propylenoxid und Ethylenoxid, EO/PO-Polyether hergestellt nach dem Stand der Technik durch eine KOH-katalysierte Umsetzung mit Allylalkohol als Startalkohol) vorgelegt und unter Rühren auf 90 °C geheizt. Die exotherme Reaktion wurde durch Zugabe von 10 ppm Platin in Form des Karstedt-Katalysators (1,5 Gew.% Pt in Decamethylcyclopentasiloxan) gestartet und nach Abklingen der Exothermie weiter bei 90°C gerührt. Der gasvolumetrisch bestimmte SiH-Umsatz lag nach einer Stunde bei 100 %. Nach Zugabe von 9,8 g Propylenglykol und Filtration über einen Faltenfilter erhielt man eine klare, gelb-bräunliche Flüssigkeit mit einer Viskosität von 5568 mPa s bei 25°C.

Entschäumer 2 unterscheidet sich von Entschäumer 1 dadurch, dass er keinen aromatischen Rest R³ sondern ausschließlich Polyetherreste R² aufweist.

### Entschäumer 3 (Vergleichsbeispiel):

Entschäumer 3 entspricht dem Entschäumer E1 aus DE 10 2007 031 287 A1 und wurde angelehnt an die dort offenbarte Herstellungsvorschrift wie folgt hergestellt:
In einem 500-ml-Vierhalskolben mit angeschlossenem KPG-Rührer, Rückflusskühler und Innenthermometer wurden 58,6 g eines endständig und seitständig SiH-funktionellen Polydimethylsiloxans mit einer mittleren Kettenlänge von 155 und mit einem Wasserstoffgehalt von 2,40 val SiH/kg und 127,2 g eines hydroxyfunktionellen Allylpolyoxyalkylens mit einem mittleren Molekulargewicht von 1471 g/mol (bestimmt nach Jodzahl), einem Propylenoxidanteil von 88 Gew.% und einem Ethylenoxidanteil von 12 Gew.% (Gew.% bezogen auf die Gesamtmasse von Propylenoxid und Ethylenoxid, EO/PO-Polyether hergestellt nach dem Stand der Technik durch eine KOH-katalysierte Umsetzung mit Allylalkohol als Startalkohol), 4,1 g eines hydroxyfunktionellen Allylpolyoxyalkylens mit einem mittleren Molekulargewicht von 903 g/mol (bestimmt nach Jodzahl), einem Butylenoxidanteil von 36 Gew.% und einem Ethylenoxidanteil von 64 Gew.% (Gew.% bezogen auf die Gesamtmasse von Butylenoxid und Ethylenoxid, EO/BO-Polyether hergestellt nach dem Stand der Technik durch eine KOH-katalysierte Umsetzung mit Allylalkohol als Startalkohol) sowie 12,2 g 2-Allylphenol vorgelegt und unter Rühren auf 90 °C geheizt. Die exotherme Reaktion wurde durch Zugabe von 10 ppm Platin in Form des Karstedt-Katalysators (1,5 Gew.% Pt in Decamethylcyclopentasiloxan) gestartet und nach Abklingen der Exothermie weiter bei 90°C gerührt. Der gasvolumetrisch bestimmte SiH-Umsatz lag nach einer Stunde bei 100 %. Nach Zugabe von 12 g Propylenglykol und 40,4 g Solvesso^{®} 150 (Lösungsmittel auf Basis aromatischer Kohlenwasserstoffe, kommerziell erhältlich von der Firma Brenntag) und Filtration über einen Faltenfilter erhielt man eine klare, gelbe Flüssigkeit mit einer Viskosität von 834 mPa s bei 24°C.

### Entschäumer 4 (Vergleichsbeispiel):

Entschäumer 4 ist kommerziell unter der Bezeichnung TEGOPREN^{®} 5851 (TP 5851) von der Firma Evonik Industries AG erhältlich. Es handelt sich um ein polyethermodifiziertes Polysiloxan, das keine aromatischen Gruppen R³ aufweist.

### Anwendungstechnische Testverfahren:

### Entschäumungsvermögen:

Zur Prüfung des Entschäumungsvermögens der Entschäumer werden diese in einem Additivpaket nach dem Stand der Technik gelöst. Das Additivpaket mit Entschäumer wird laut Vorgabe mit 320 Massen-ppm (berechnet als Additivpaket ohne Entschäumer) im Diesel eingesetzt. Dem Additivpaket wird dabei Entschäumer in einer Menge zugegeben, sodass der in der Tabelle 2 angegebene Si-Gehalt erhalten wird.

Die Zusammensetzung des Additivpakets ohne Entschäumer ist Tabelle 1 zu entnehmen:

**Tabelle 1:**

| Funktion | Rohstoff | Massenanteil im Additivpaket |
|---|---|---|
| Korrosionsinhibitor | C13-Fettalkohol-24-propoxylat | 21 % |
| Schmierverbesserer | PiB-Phenol-Formaldehyd-amin | 21 % |
| Cetanzahlverbesserer | Isoamylnitrat | 30 % |
| Demulgator/*Dehazer* | alkoxyliertes Acetylendiol | 2% |
| Lösungsmittel | Ethylhexylalkohol | 26 % |

Der Schaumzerfall des mit Additivpaket und Entschäumer versetzten Dieselkraftstoffs wird in einer Druckapparatur (BNPe-Test: Flüssige Mineralölerzeugnisse - Bestimmung der Schaumneigung von Gasölen, NFM 07-075:1997) getestet. Dieser Test wird wie folgt durchgeführt: 100 ccm Dieselkraftstoff werden in ein Glasrohr gefüllt und mit einem Druck von 0,4 bar beaufschlagt. Über ein Magnetventil am Boden ist das Glasrohr mit einem 250-ccm-Messzylinder verbunden. Über das Ventil wird der Diesel in den Messzylinder injiziert. Nach der Injektion werden die anfängliche Schaumhöhe [ml] und die Zeit [s] bestimmt, bis der Schaum zerfallen ist. Es werden mindestens Doppelbestimmungen durchgeführt. Liegen die Ergebnisse der Zerfallszeit weiter als 4 s und die der Schaumhöhenmessung weiter als 10 ml auseinander, muss eine weitere Messung durchgeführt werden. Die Schaumhöhe ergibt sich als Differenz zwischen der maximalen Schaumhöhe und der Flüssigkeitshöhe. Die Schaumzerfallszeit gibt die Zeitdauer an, die benötigt wird, bis die Flüssigkeitsoberfläche das erste Mal sichtbar ist. Die in Tabelle 2 angegeben Werte sind Mittelwerte. Die Entschäumungstests werden unter Verwendung von B0-Diesel und B10-Diesel durchgeführt. Als B10-Diesel wird dabei ein Dieselkraftstoff aus 90 Gew.% fossilem Diesel gemäß DIN EN 590 (Ausgabe Oktober 2017) und 10 Gew.% Rapsölmethylester (Biokraftstoffbeimischung) verstanden. Unter B0-Diesel wird wiederum ein Dieselkraftstoff aus 100 Gew.% fossilem Diesel gemäß DIN EN 590 (Ausgabe Oktober 2017) ohne Biokraftstoffbeimischung verstanden. Bei den untersuchten Dieselkraftstoffen B0-Diesel und B10-Diesel handelt es sich zudem um feuchte Dieselkraftstoffe mit einem Gehalt von 250 Massen-ppm Wasser.

### Oberflächenspannung:

Die Oberflächenspannung wird gemäß der Norm ISO 19403-3:2017 bestimmt. Da die Entschäumer nicht wasserlöslich sind, wird dazu ein Lösungsmittel-Wasser-Gemisch gewählt, das sowohl den Entschäumer löst als auch eine Oberflächenspannung aufweist, die der eines mit Biodiesel versetzten Dieselkraftstoffs entspricht. Das Lösungsmittel-Wasser-Gemisch besteht aus 45 Gew.% Butylglykol und 55 Gew.% Wasser und zeigt eine Oberflächenspannung von ca. 27,4 mN/m. Zur Bestimmung der Oberflächenspannung wird 1 g des Entschäumers in 1 L des Lösungsmittel-Wasser-Gemisches gelöst. Die so bestimmten Oberflächenspannungen sind in Tabelle 2 aufgeführt. Um einen entschäumenden Effekt zu erzielen, ist es erforderlich, dass das Lösungsmittel-Wasser-Gemisch mit Entschäumer eine geringere Oberflächenspannung aufweist als das Lösungsmittel-Wasser-Gemisch ohne Entschäumer.

### Pourpoint

Der Pourpoint des reinen Entschäumers ist ein Maß für die Kältestabilität und wird gemäß DIN ISO 3016:2017-11 bestimmt.

### Anwendungstechnische Untersuchungsergebnisse:

Die Ergebnisse der anwendungstechnischen Untersuchungen sind in Tabelle 2 zusammengefasst.

**Tabelle 2:**

| | Entschäumer | | | | Blindwert [1] |
|---|---|---|---|---|---|
| | 1 | 2 | 3 | 4 | |
| Oberflächenspannung [mN/m] | 22,6 | 23,8 | 26,5 | 26,3 | 27,4 |
| Pourpoint [°C] | < -25 | -5 | < -25 | -18 | -3 |
| Si-Gehalt im OMS [Gew.%] ^{[2]} | 15 | 15 | 9 | 12 | - |
| OMS-Gehalt der Kraftstoffzusammensetzung [Gew.-ppm] ^{[3]} | 4 | 4 | 12 | 12 | 0 |
| Si-Gehalt der Kraftstoffzusammensetzung [Gew.-ppm] ^{[4]} | 0,6 | 0,6 | 1,0 | 1,4 | 0 |
| Schaumhöhe B0 [mL] | 29 | 35 | 45 | 60 | 132 |
| Schaumzerfallszeit B0 [s] | 1 | 1 | 1 | 1 | 38 |
| Schaumhöhe B10 [mL] | 59 | 62 | 60 | 103 | 135 |
| Schaumzerfallszeit B10 [s] | 1 | 1 | 1 | 9 | 42 |

| | | | | | |
|---|---|---|---|---|---|
| [1] Blindwert bezieht sich auf eine entsprechende Zusammensetzung ohne Entschäumer [2] Siliziumgehalt des organomodifizierten Polysiloxans in Gew.% (Massen-%, Massenanteil von Silizium im organomodifizierten Siloxan) [3] Konzentration des organomodifizierten Polysiloxans in der Kraftstoffzusammensetzung bestehend aus B10- bzw. B0-Diesel, Additivpaket mit bzw. ohne Entschäumer in Gew.-ppm (Massen-ppm, Massenanteil des organomodifizierten Polysiloxans bezogen auf die Gesamtzusammensetzung) [4] Siliziumgehalt der Kraftstoffzusammensetzung bestehend aus B10- bzw. B0-Diesel, Additivpaket mit bzw. ohne Entschäumer in Gew.-ppm (Massen-ppm, Massenanteil von Silizium bezogen auf die Gesamtzusammensetzung) | | | | | |

Der erfindungsgemäße Entschäumer 1 führt bereits bei einer sehr geringen Einsatzkonzentration zu einer ausreichend geringen Oberflächenspannung, kurzen Schaumzerfallszeiten, geringen Schaumhöhen und einem niedrigen Pourpoint und ist in mindestens einer dieser Eigenschaften besser als die nicht erfindungsgemäßen Entschäumer 2 bis 4.

Aufgrund der verbesserten Wirksamkeit des Entschäumers 1 werden zudem geringere Einsatzmengen benötigt. Dies führt zu einer geringeren SiO₂-Freisetzung bei der Verbrennung. Langzeit-Dieselfilter müssen somit erheblich weniger Material aufnehmen. Die Belastung durch SiO₂-Partikel wird reduziert.

Es zeigt sich insbesondere, dass für eine Schaumzerfallszeit von weniger als 5 Sekunden und einer Reduktion der Schaumhöhe auf weniger als 50% des Blindwertes Entschäumer in einer Menge von 0,6 Gew.-ppm Si bezogen auf Kraftstoffzusammensetzung benötigt werden, anstelle der bisher üblichen Mengen von 0,75 bis 1 Gew.-ppm, wie sie im Stand der Technik erwähnt werden. Dies bedeutet eine 25 bis 70%ige Reduktion der SiO₂-Last für den Dieselfilter.

## Patentansprüche

1. Organomodifiziertes Polysiloxan der allgemeinen Formel (I), 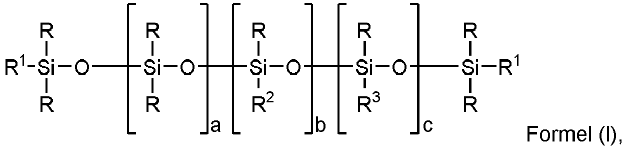 worin
R jeweils unabhängig voneinander ausgewählt ist aus der Gruppe bestehend aus Kohlenwasserstoffresten, vorzugsweise mit 1 bis 10 Kohlenstoffatomen, besonders bevorzugt Methyl;
R¹ jeweils unabhängig voneinander ausgewählt ist aus der Gruppe bestehend aus R, R² und R³, bevorzugt R, besonders bevorzugt Methyl;
R² jeweils unabhängig voneinander ausgewählt ist aus der Gruppe bestehend aus Polyetherresten der allgemeinen Formel (II), -Z¹(OC₂H₄)_{d}(OC₃H₆)ₑ(OC₄H₈)_{f}(OC₂H₃Ph)_{g}OR⁴ Formel (II), bevorzugt der allgemeinen Formel (IIa), -Z¹(OC₂H₄)_{d}(OC₃H₆)ₑOR⁴ Formel (IIa), besonders bevorzugt der allgemeinen Formel (IIb), -(CH₂)₃(OC₂H₄)_{d}(OC₃H₆)ₑOH Formel (IIb);
Z¹ jeweils unabhängig voneinander ausgewählt ist aus der Gruppe bestehend aus zweiwertigen aliphatischen Kohlenwasserstoffresten mit 2 bis 10, bevorzugt 3 bis 4, besonders bevorzugt 3 Kohlenstoffatomen;
Ph ein Phenylrest ist;
R⁴ jeweils unabhängig voneinander ausgewählt ist aus der Gruppe bestehend aus einem Wasserstoffradikal, Alkylresten mit 1 bis 4 Kohlenstoffatomen und Acylresten mit 1 bis 4 Kohlenstoffatomen; bevorzugt ausgewählt ist aus der Gruppe bestehend aus einem Wasserstoffradikal, einem Methylrest und einem Acetylrest; besonders bevorzugt ein Wasserstoffradikal ist.
R³ jeweils unabhängig voneinander ausgewählt ist aus der Gruppe bestehend aus Resten der allgemeinen Formel (III), 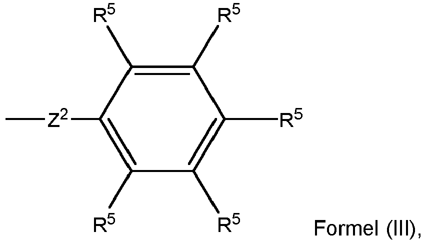
Z² jeweils unabhängig voneinander ausgewählt ist aus der Gruppe bestehend aus zweiwertigen aliphatischen Kohlenwasserstoffresten mit 2 bis 10, bevorzugt 3 bis 4, besonders bevorzugt 3 Kohlenstoffatomen;
R⁵ jeweils unabhängig voneinander ausgewählt ist aus der Gruppe bestehend aus einem Wasserstoffradikal, einer Hydroxygruppe, Alkylresten mit 1 bis 4 Kohlenstoffatomen und Alkoxyresten mit 1 bis 4 Kohlenstoffatomen, mit der Maßgabe, dass mindestens ein Rest R⁵ eine Hydroxygruppe ist;
wobei gilt:
a = 50 bis 960, bevorzugt 80 bis 200, besonders bevorzugt 100 bis 190;
b = 4 bis 85, bevorzugt 6 bis 25, besonders bevorzugt 8 bis 20;
c = 0,5 bis 10, bevorzugt 0,8 bis 8, besonders bevorzugt 1 bis kleiner als 4,5;
d = 0 bis 60, bevorzugt 5 bis 20, besonders bevorzugt 10 bis 15;
e = 0 bis 60, bevorzugt 1 bis 30, besonders bevorzugt 2 bis 5;
f = 0 bis 60, bevorzugt 0 bis 10, besonders bevorzugt 0;
g = 0 bis 60, bevorzugt 0 bis 10, besonders bevorzugt 0;
mit der Maßgabe, dass gilt:
d+e+f+g = 1 bis 60, bevorzugt 5 bis 30, besonders bevorzugt 10 bis 20; und
a/(b+c) ist größer als 7, bevorzugt >7 bis 13, besonders bevorzugt 8 bis 12.

2. Organomodifiziertes Polysiloxan nach Anspruch 1, **dadurch gekennzeichnet, dass** gilt: a+b+c+2= 60 bis 1000, bevorzugt 90 bis 220, besonders bevorzugt 130 bis 170.

3. Organomodifiziertes Polysiloxan nach mindestens einem der Ansprüche 1 und 2, **dadurch gekennzeichnet, dass** gilt:
f = 0 und g = 0;
bevorzugt f = 0 und g = 0 und Z¹ = -(CH₂)₃-;
besonders bevorzugt f = 0 und g = 0 und Z¹ = -(CH₂)₃- und R⁴ = H.

4. Organomodifiziertes Polysiloxan nach mindestens einem der Ansprüche 1 bis 3, **dadurch gekennzeichnet, dass** das zahlenmittlere Molekulargewicht M_{N} des Polyetherrests R² von 500 g/mol bis 1400 g/mol, bevorzugt von 600 g/mol bis 1200 g/mol, besonders bevorzugt von 700 g/mol bis 900 g/mol beträgt.

5. Organomodifiziertes Polysiloxan nach mindestens einem der Ansprüche 1 bis 4, **dadurch gekennzeichnet, dass** der Massenanteil der Oxyethylengruppen (OC₂H₄) bezogen auf die Gesamtmasse aller Oxyalkylengruppen mehr als 50%, bevorzugt 60% bis 90%, besonders bevorzugt 70% bis 80% beträgt.

6. Zusammensetzung enthaltend die Komponenten:
(a) mindestens einen Entschäumer ausgewählt aus der Gruppe bestehend aus organomodifizierten Polysiloxanen gemäß Formel (I) nach mindestens einem der Ansprüche 1 bis 5;
(b) mindestens einen Demulgator ausgewählt aus der Gruppe bestehend aus Acetylendiolen, Acetylendiolpolyethern, Fettalkoholalkoxylaten und organomodifizierten Polysiloxanen, die sich von den organomodifizierten Polysiloxanen gemäß Formel (I) unterscheiden;
(c) optional mindestens ein Lösungsmittel ausgewählt aus der Gruppe bestehend aus Fettalkoholen mit 6 bis 11 Kohlenstoffatomen.

7. Zusammensetzung nach Anspruch 6, **dadurch gekennzeichnet, dass**:
Komponente (a) in einem Massenteil von 20% bis 80%, bevorzugt von 30% bis 70%, besonders bevorzugt von 40% bis 60%; und
Komponente (b) in einem Massenteil von 1% bis 25%, bevorzugt von 2% bis 20%, besonders bevorzugt von 4% bis 15%;
bezogen auf die Gesamtmasse der Zusammensetzung enthalten ist.

8. Zusammensetzung nach mindestens einem der Ansprüche 6 und 7, **dadurch gekennzeichnet, dass** die Komponenten (a) und (b) in einem Gewichtsverhältnis von (a) zu (b) von 2:1 zu 15:1, bevorzugt von 3:1 zu 13:1, besonders bevorzugt von 4:1 zu 11:1 enthalten sind.

9. Kraftstoffzusammensetzung enthaltend Dieselkraftstoff, der vorzugsweise Biokraftstoff enthält, und mindestens ein organomodifiziertes Polysiloxan nach mindestens einem der Ansprüche 1 bis 5 oder mindestens eine Zusammensetzung nach mindestens einem der Ansprüche 6 bis 8.

10. Kraftstoffzusammensetzung nach Anspruch 9, **dadurch gekennzeichnet, dass** der Massenanteil des mindestens einen organomodifizierten Polysiloxans bezogen auf die Gesamtmasse der Kraftstoffzusammensetzung von 1 ppm bis 40 ppm, bevorzugt von 2 ppm bis 25 ppm besonders bevorzugt von 4 ppm bis 15 ppm beträgt.

11. Kraftstoffzusammensetzung nach mindestens einem der Ansprüche 9 und 10, **dadurch gekennzeichnet, dass** der Massenanteil von Silizium bezogen auf die Gesamtmasse der Kraftstoffzusammensetzung von 0,2 ppm bis 2 ppm, bevorzugt von 0,4 ppm bis 1,5 ppm besonders bevorzugt von 0,5 ppm bis 0,8 ppm beträgt.

12. Kraftstoffzusammensetzung nach mindestens einem der Ansprüche 9 bis 11, **dadurch gekennzeichnet, dass** der Massenanteil an Biokraftstoff bezogen auf die Gesamtmasse der Kraftstoffzusammensetzung mindestens 4%, bevorzugt von 4% bis 20% besonders bevorzugt von 4% bis 8% beträgt.

13. Kraftstoffzusammensetzung nach mindestens einem der Ansprüche 9 bis 12, **dadurch gekennzeichnet, dass** der Biokraftstoff ausgewählt ist aus der Gruppe bestehend aus Fettsäuremethylestern, hydrierten Pflanzenölen, Kohlenwasserstoffen aus *Biomass-to-Liquid-*Prozessen und Kohlenwasserstoffen aus *Gas-to-Liquid*-Prozessen.

14. Verwendung eines organomodifizierten Polysiloxans nach mindestens einem der Ansprüche 1 bis 5 oder einer Zusammensetzung nach mindestens einem der Ansprüche 6 bis 8 zur Entschäumung von Kraftstoffen, bevorzugt von Dieselkraftstoffen, besonders bevorzugt von Dieselkraftstoffen, die Biokraftstoffe enthalten.

## Claims

1. Organomodified polysiloxane of general formula (I), 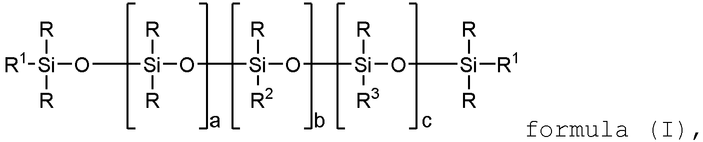 in which
R in each case independently is selected from the group consisting of hydrocarbon radicals, preferably having 1 to 10 carbon atoms, particularly preferably methyl;
R¹ in each case independently is selected from the group consisting of R, R² and R³, preferably R, particularly preferably methyl;
R² in each case independently is selected from the group consisting of polyether radicals of general formula (II) ,
-Z¹(OC₂H₄)_{d}(OC₃H₆)ₑ(OC₄H₈)_{f}(OC₂H₃Ph)_{g}OR⁴ formula (II),
preferably of general formula (IIa),
-Z¹(OC₂H₄)_{d}(OC₃H₆)ₑOR⁴ formula (IIa),
particularly preferably of general formula (IIb),
- (CH₂)₃(OC₂H₄)_{d}(OC₃H₆)ₑOH formula (IIb);
Z¹ in each case independently is selected from the group consisting of divalent aliphatic hydrocarbon radicals having 2 to 10, preferably 3 to 4, particularly preferably 3, carbon atoms;
Ph is a phenyl radical;
R⁴ in each case independently is selected from the group consisting of a hydrogen radical, alkyl radicals having 1 to 4 carbon atoms and acyl radicals having 1 to 4 carbon atoms; preferably is selected from the group consisting of a hydrogen radical, a methyl radical and an acetyl radical; particularly preferably is a hydrogen radical,
R³ in each case independently is selected from the group consisting of radicals of general formula (III), 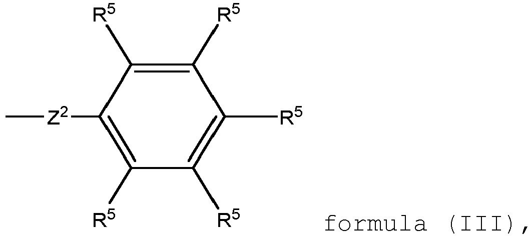
Z² in each case independently is selected from the group consisting of divalent aliphatic hydrocarbon radicals having 2 to 10, preferably 3 to 4, particularly preferably 3, carbon atoms;
R⁵ in each case independently is selected from the group consisting of a hydrogen radical, a hydroxy group, alkyl radicals having 1 to 4 carbon atoms and alkoxy radicals having 1 to 4 carbon atoms, with the proviso that at least one radical R⁵ is a hydroxy group;
where:
a = 50 to 960, preferably 80 to 200, particularly preferably 100 to 190;
b = 4 to 85, preferably 6 to 25, particularly preferably 8 to 20;
c = 0.5 to 10, preferably 0.8 to 8, particularly preferably 1 to less than 4.5;
d = 0 to 60, preferably 5 to 20, particularly preferably 10 to 15;
e = 0 to 60, preferably 1 to 30, particularly preferably 2 to 5;
f = 0 to 60, preferably 0 to 10, particularly preferably 0;
g = 0 to 60, preferably 0 to 10, particularly preferably 0;
with the proviso that:
d+e+f+g = 1 to 60, preferably 5 to 30, particularly preferably 10 to 20; and
a/(b+c) is greater than 7, preferably >7 to 13, particularly preferably 8 to 12.

2. Organomodified polysiloxane according to Claim 1, **characterized in that**:
a+b+c+2 = 60 to 1000, preferably 90 to 220, particularly preferably 130 to 170.

3. Organomodified polysiloxane according to at least one of Claims 1 and 2, **characterized in that**:
f = 0 and g = 0;
preferably f = 0 and g = 0 and Z¹ = - (CH₂)₃-;
particularly preferably f = 0 and g = 0 and Z¹ = -(CH₂)₃-and R⁴ = H.

4. Organomodified polysiloxane according to at least one of Claims 1 to 3, **characterized in that** the number-average molecular weight M_{N} of the polyether radical R² is from 500 g/mol to 1400 g/mol, preferably from 600 g/mol to 1200 g/mol, particularly preferably from 700 g/mol to 900 g/mol.

5. Organomodified polysiloxane according to at least one of Claims 1 to 4, **characterized in that** the proportion by mass of the oxyethylene groups (OC₂H₄), based on the total mass of all oxyalkylene groups, is more than 50%, preferably 60% to 90%, particularly preferably 70% to 80%.

6. Composition comprising the components:
(a) at least one defoamer selected from the group consisting of organomodified polysiloxanes of formula (I) according to at least one of Claims 1 to 5;
(b) at least one demulsifier selected from the group consisting of acetylenediols, acetylenediol polyethers, fatty alcohol alkoxylates and organomodified polysiloxanes that differ from the organomodified polysiloxanes of formula (I);
(c) optionally at least one solvent selected from the group consisting of fatty alcohols having 6 to 11 carbon atoms.

7. Composition according to Claim 6, **characterized in that**:
component (a) is present at a proportion by mass of 20% to 80%, preferably of 30% to 70%, particularly preferably of 40% to 60%; and
component (b) is present at a proportion by mass of 1% to 25%, preferably of 2% to 20%, particularly preferably of 4% to 15%;
based on the total mass of the composition.

8. Composition according to at least one of Claims 6 and 7, **characterized in that** components (a) and (b) are present in a ratio by weight of (a) to (b) of from 2:1 to 15:1, preferably of from 3:1 to 13:1, particularly preferably of from 4:1 to 11:1.

9. Fuel composition comprising diesel fuel, said diesel fuel preferably comprising biofuel, and at least one organomodified polysiloxane according to at least one of Claims 1 to 5 or at least one composition according to at least one of Claims 6 to 8.

10. Fuel composition according to Claim 9, **characterized in that** the proportion by mass of the at least one organomodified polysiloxane, based on the total mass of the fuel composition, is from 1 ppm to 40 ppm, preferably from 2 ppm to 25 ppm, particularly preferably from 4 ppm to 15 ppm.

11. Fuel composition according to at least one of Claims 9 and 10, **characterized in that** the proportion by mass of silicon, based on the total mass of the fuel composition, is from 0.2 ppm to 2 ppm, preferably from 0.4 ppm to 1.5 ppm, particularly preferably from 0.5 ppm to 0.8 ppm.

12. Fuel composition according to at least one of Claims 9 to 11, **characterized in that** the proportion by mass of biofuel, based on the total mass of the fuel composition, is at least 4%, preferably from 4% to 20%, particularly preferably from 4% to 8%.

13. Fuel composition according to at least one of Claims 9 to 12, **characterized in that** the biofuel is selected from the group consisting of fatty acid methyl esters, hydrogenated vegetable oils, hydrocarbons from biomass-to-liquid processes and hydrocarbons from gas-to-liquid processes.

14. Use of an organomodified polysiloxane according to at least one of Claims 1 to 5 or of a composition according to at least one of Claims 6 to 8 for the defoaming of fuels, preferably of diesel fuels, particularly preferably of diesel fuels which comprise biofuels.

## Revendications

1. Polysiloxane organomodifié de formule générale (I) 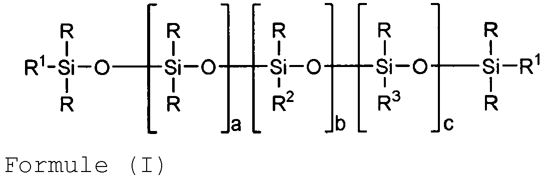 dans laquelle
R est choisi, à chaque fois indépendamment, dans le groupe constitué par les radicaux hydrocarbonés, comprenant de préférence 1 à 10 atomes de carbone, de manière particulièrement préférée méthyle ;
R¹ est choisi, à chaque fois indépendamment, dans le groupe constitué par R, R² et R³, de préférence R, de manière particulièrement préférée méthyle ;
R² est choisi, à chaque fois indépendamment, dans le groupe constitué par les radicaux polyéther de formule générale (II)
-Z¹(OC₂H₄)_{d}(OC₃H₆)ₑ(OC₄H₈)_{f}(OC₂H₃Ph)_{g}OR⁴ Formule (II),
de préférence de formule générale (IIa)
-Z¹(OC₂H₄)_{d}(OC₃H₆)ₑOR⁴ Formule (IIa),
de manière particulièrement préférée de formule générale (IIb)
- (CH₂)₃(OC₂H₄)_{d}(OC₃H₆)ₑOH Formule (IIb);
Z¹ est choisi, à chaque fois indépendamment, dans le groupe constitué par les radicaux hydrocarbonés divalents, aliphatiques, comprenant 2 à 10, de préférence 3 à 4, de manière particulièrement préférée 3 atomes de carbone ;
Ph représente un radical phényle
R⁴ est choisi, à chaque fois indépendamment, dans le groupe constitué par un radical hydrogène, les radicaux alkyle comprenant 1 à 4 atomes de carbone et les radicaux acyle comprenant 1 à 4 atomes de carbone ; de préférence choisi dans le groupe constitué par un radical hydrogène, un radical méthyle et un radical acétyle ; et représente de manière particulièrement préférée un radical hydrogène,
R³ est choisi, à chaque fois indépendamment, dans le groupe constitué par les radicaux de formule générale (III) 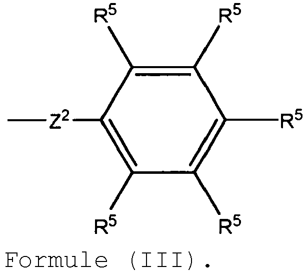
Z² est choisi, à chaque fois indépendamment, dans le groupe constitué par les radicaux hydrocarbonés divalents, aliphatiques, comprenant 2 à 10, de préférence 3 à 4, de manière particulièrement préférée 3 atomes de carbone ;
R⁵ est choisi, à chaque fois indépendamment, dans le groupe constitué par un radical hydrogène, un groupe hydroxy, les radicaux alkyle comprenant 1 à 4 atomes de carbone et les radicaux alcoxy comprenant 1 à 4 atomes de carbone, à condition qu'au moins un radical R⁵ représente un groupe hydroxy ;
où
a = 50 à 960, de préférence 80 à 200, de manière particulièrement préférée 100 à 190 ;
b = 4 à 85, de préférence 6 à 25, de manière particulièrement préférée 8 à 20 ;
c = 0,5 à 10, de préférence 0,8 à 8, de manière particulièrement préférée 1 à moins de 4,5 ;
d = 0 à 60, de préférence 5 à 20, de manière particulièrement préférée 10 à 15 ;
e = 0 à 60, de préférence 1 à 30, de manière particulièrement préférée 2 à 5 ;
f = 0 à 60, de préférence 0 à 10, de manière particulièrement 0 ;
g = 0 à 60, de préférence 0 à 10, de manière particulièrement 0 ;
à condition que
d + e + f + g = 1 à 60, de préférence 5 à 30, de manière particulièrement préférée 10 à 20 ; et
a/(b + c) soit supérieur à 7, de préférence > 7 à 13, de manière particulièrement préférée 8 à 12.

2. Polysiloxane organomodifié selon la revendication 1, **caractérisé en ce que** :
a + b + c + 2 = 60 à 1000, de préférence 90 à 220, de manière particulièrement préférée 130 à 170.

3. Polysiloxane organomodifié selon au moins l'une quelconque des revendications 1 et 2, **caractérisé en ce que** :
f = 0 et g = 0 ;
de préférence f = 0 et g = 0 et Z¹ = -(CH₂)₃- ;
de manière particulièrement préférée f = 0 et g = 0 et Z¹ = -(CH₂)₃- et R⁴ = H.

4. Polysiloxane organomodifié selon au moins l'une quelconque des revendications 1 et 3, **caractérisé en ce que** le poids moléculaire moyen en nombre M_{N} du radical polyétherol R² est de 500 g/mole à 1400 g/mole, de préférence de 600 g/mole à 1200 g/mole, de manière particulièrement préférée de 700 g/mole à 900 g/mole.

5. Polysiloxane organomodifié selon au moins l'une quelconque des revendications 1 et 4, **caractérisé en ce que** la proportion massique des groupes oxyéthylène (OC₂H₄), par rapport à la masse totale de tous les groupes oxyalkylène, est de plus de 50%, de préférence de 60% à 90%, de manière particulièrement préférée de 70% à 80%.

6. Composition contenant les composants :
(a) au moins un antimousse choisi dans le groupe constitué par les polysiloxanes organomodifiés selon la formule (I) selon au moins l'une quelconque des revendications 1 à 5 ;
(b) au moins un désémulsifiant choisi dans le groupe constitué par les acétylènediols, les acétylènediolpolyéthers, les alcoxylates d'alcool gras et les polysiloxanes organomodifiés, qui se distinguent des polysiloxanes organomodifiés selon la formule (I) ;
(c) éventuellement au moins un solvant choisi dans le groupe constitué par les alcools gras comprenant 6 à 11 atomes de carbone.

7. Composition selon la revendication 6, **caractérisée en ce que**
- le composant (a) est contenu en une proportion massique de 20% à 80%, de préférence de 30% à 70%, de manière particulièrement préférée de 40% à 60% ; et
- le composant (b) est contenu en une proportion massique de 1% à 25%, de préférence de 2% à 20%, de manière particulièrement préférée de 4% à 15% ;
par rapport à la masse totale de la composition.

8. Composition selon au moins l'une quelconque des revendications 6 et 7, **caractérisée en ce que** les composants (a) et (b) sont contenus dans un rapport pondéral de (a) à (b) de 2:1 à 15:1, de préférence de 3:1 à 13:1, de manière particulièrement préférée de 4:1 à 11:1.

9. Composition de carburant contenant du carburant diesel, qui contient de préférence un biocarburant, et au moins un polysiloxane organomodifié selon au moins l'une quelconque des revendications 1 à 5 ou au moins une composition selon au moins l'une quelconque des revendications 6 à 8.

10. Composition de carburant selon la revendication 9, **caractérisée en ce que** la proportion massique dudit au moins un polysiloxane organomodifié, par rapport à la masse totale de la composition de carburant, est de 1 ppm à 40 ppm, de préférence de 2 ppm à 25 ppm, de manière particulièrement préférée de 4 ppm à 15 ppm.

11. Composition de carburant selon au moins l'une quelconque des revendications 9 et 10, **caractérisée en ce que** la proportion massique de silicium, par rapport à la masse totale de la composition de carburant, est de 0,2 ppm à 2 ppm, de préférence de 0,4 ppm à 1,5 ppm, de manière particulièrement préférée de 0,5 ppm à 0,8 ppm.

12. Composition de carburant selon au moins l'une quelconque des revendications 9 à 11, **caractérisée en ce que** la proportion massique de biocarburant, par rapport à la masse totale de la composition de carburant, est d'au moins 4%, de préférence de 4% à 20%, de manière particulièrement préférée de 4% à 8%.

13. Composition de carburant selon au moins l'une quelconque des revendications 9 à 12, **caractérisée en ce que** le biocarburant est choisi dans le groupe constitué par les esters méthyliques d'acides gras, les huiles végétales hydrogénées, les hydrocarbures provenant de processus biomasse-à-liquide et les hydrocarbures provenant de processus gaz-à-liquide.

14. Utilisation d'un polysiloxane organomodifié selon au moins l'une quelconque des revendications 1 à 5 ou d'une composition selon au moins l'une quelconque des revendications 6 à 8 pour le démoussage de carburants, de préférence de carburants diesel, de manière particulièrement préférée de carburants diesel qui contiennent des biocarburants.
